# EUROPÄISCHE PATENTSCHRIFT

(11) **EP 3 581 541 B1**
(45) Veröffentlichungstag und Bekanntmachung des Hinweises auf die Patenterteilung: **04.12.2024**
(21) Anmeldenummer: 19189859.2
(22) Anmeldetag: 18.04.2017
(51) Int. Cl.: B67B 3/20

(54) **VERSCHLIESSERKOPF ZUM VERSCHLIESSEN EINES BEHÄLTERS MIT EINEM BEHÄLTERVERSCHLUSS**
CLOSURE HEAD FOR CLOSING A CONTAINER WITH A CONTAINER CLOSURE
TÊTE D'UN DISPOSITIF DE FERMETURE POUR FERMER UN RÉCIPIENT AVEC UNE FERMETURE

(30) Priorität: 18.04.2016 DE 102016107167
(43) Veröffentlichungstag der Anmeldung: 18.12.2019
(62) Teilanmeldung aus: 17717735.9
(73) Patentinhaber: KRONES AG, 93073 Neutraubling (DE)
(72) Erfinder: Schoenfelder, Markus, 93073 Neutraubling (DE)
(74) Vertreter: Nordmeyer, Philipp Werner

(56) Entgegenhaltungen:
- EP-A1- 0 444 500
- WO-A1-2009/016501
- WO-A1-2009/016502
- WO-A1-2014/057049
- FR-A1- 2 947 247
- US-A- 4 232 499

## Beschreibung

### Stand der Technik

Die Erfindung bezieht sich auf einen Verschließerkopf zum Verschließen eines Behälters mit einem Behälterverschluss, bevorzugt zum Verschließen eines Behälters mit einem Schraubverschluss in einer Getränkeabfüllanlage, bevorzugt zum Verschließen eines Behälters mit einem Schraubverschluss in einer aseptischen Getränkeabfüllanlage.

### Stand der Technik

Verschließerköpfe zum Verschließen von Behältern mit einem Behälterverschluss sind aus dem Stand der Technik hinlänglich bekannt. Hierbei wird beispielsweise ein über ein Pickrad zugeführter Behälterverschluss durch Klemmbacken des Verschließerkopfs von dem Pickrad gegriffen und dann am Verschließerkopf gehalten. Der mit dem Behälterverschluss versehene Verschließerkopf wird dann über dem zu verschließenden Behälter positioniert und auf diesen abgesenkt, um den Behälter mit dem Behälterverschluss zu verschließen. Wenn ein Schraubverschluss auf den Behälter aufgebracht werden soll, erfährt der Verschließerkopf zusätzlich zu der Absenkbewegung eine Drehbewegung. Durch die Kombination aus Absenken und Drehen kann der Behälterverschluss auf den Behälter geschraubt werden.

Des Weiteren sieht der Stand der Technik Systeme vor, die ein Austauschen der verschlussbezogenen Komponenten der Verschließerköpfe ermöglichen, um ein Aufbringen von Behälterverschlüssen unterschiedlicher Geometrie mit dem gleichen Verschließerkopf zu ermöglichen. Das Austauschen dieser bekannten Komponenten ist aufwändig, da ein Bediener hierzu meist den Reinraum der Maschine betreten muss, um den Wechsel der verschlussbezogenen Teile zu vollziehen.

Die EP 0 876 991 B1 zeigt eine Vorrichtung zum Aufschrauben einer Kappe auf einen Behälterhals, welche um horizontale Achsen schwenkbare Greifmittel aufweist, die mit Klemmbacken zum Klemmen der Kappe versehen sind. Ein ähnlicher Aufbau zeigt der Schraub- und Rollkopf zur Anbringung von Deckeln mit Gewinde, welcher aus der EP 1 908 725 B1 bekannt ist.

Die US 5 851 042 A zeigt eine Klemmbuchse zum Greifen von Behälterdeckeln, welche mittels eines Sicherungsbolzens an einem Verschlussgreifsystem schnellgewechselt werden kann. Zum Klemmen der Behälterdeckel werden die Segmente der Klemmbuchse mittels eines Druckzylinders nach innen gebogen, um ein Greifen des Behälterdeckels zu ermöglichen. Einerseits können in diesem Konzept auch bei einem Austausch der Klemmbuchse durch eine Klemmbuchse anderer Geometrie lediglich Behälterdeckel mit einer ähnlichen Geometrie verarbeitet werden. Andererseits können bei einer für einen dauerhaften Betrieb erforderlichen geringen Belastung der Komponenten, insbesondere der Segmente, lediglich geringe Drücke beziehungsweise Klemmkräfte auf den Behälterdeckel aufgebracht werden. Weiterhin ist dieses System unter anderem aufgrund der vielen Hinterschnitte und Gleitflächen nur äußerst bedingt für aseptische Anlagen geeignet.

Die US 4,232,499 A und WO 2009/016502 A1 beschreiben eine Vorrichtung zum Verschließen von Behältern mit Schraubverschlüssen, wobei die WO 2009/016502 A1 einen Verschließerkopf gemäß dem Oberbegriff des Anspruchs 1 offenbart. Die WO 2009/016501 A1 beschreibt eine Greifvorrichtung für Verschlüsse in einer Anlage zum Verschließen von Behältern. Die FR 2 947 247 A1 beschreibt eine Vorrichtung zum Aufbringen von Krimpelementen auf Behälter. Die EP 0 444 500 A1 beschreibt ein Werkzeug zum Verschließen von Siegelkappen für den Sicherheitsverschluss von Fässern.

### Darstellung der Erfindung

Ausgehend von dem bekannten Stand der Technik ist es eine Aufgabe der Erfindung, einen weiter verbesserten Verschließerkopf zum Verschließen eines Behälters mit einem Behälterverschluss bereitzustellen.

Diese Aufgabe wird durch einen Verschließerkopfzum Verschließen eines Behälters mit einem Behälterverschluss mit den Merkmalen des Anspruchs 1 gelöst. Vorteilhafte Ausgestaltungen ergeben sich aus den Unteransprüchen.

Entsprechend wird ein Verschließerkopfzum Verschließen eines Behälters mit einem Schraubverschluss, hierin auch als "Behälterverschluss" bezeichnet, in einer Getränkeabfüllanlage, umfassend einen Greifmechanismus mit mindestens einem Greifarm zum Greifen des Behälterverschlusses vorgeschlagen. Der Verschließerkopf weist ferner einen Betätigungszylinder zum Betätigen des Greifmechanismus und ein Vorspannelement zum Vorspannen des mindestens einen Greifarms auf, wobei der Greifarm durch das Vorspannelement in Öffnungsrichtung vorgespannt ist. Erfindungsgemäß ist der Betätigungszylinder ein Pneumatikzylinder und ist das Vorspannelement im Pneumatikzylinder angeordnet.

Auf diese Weise kann erreicht werden, dass im Betrieb beim Verlust der Ansteuerung des Greifmechanismus des Verschließerkopfes Kollisionen und Beschädigungen der Anlage vermieden werden können. Insbesondere kann bei einem Ausfall des Arbeitsmediums für den Greifmechanismus, beispielsweise einem Ausfall der Pneumatikluft, vermieden werden, dass durch den Greifmechanismus gehaltene Behälterverschlüsse mit bereits verschlossenen Behältern kollidieren oder ein im Greifmechanismus gehaltener Behälterverschluss mit einem auf einem Pickrad bereitgestellten neuen Behälterverschluss kollidiert. Durch die Vorspannung des Greifmechanismus in Öffnungsrichtung kann erreicht werden, dass beim Verlust der Ansteuerung, beispielsweise beim Verlust der Pneumatikluft, aufgenommene Behälterverschlüsse durch das vorspannungsbedingte Öffnen des Greifmechanismus herabfallen und keine neuen Behälterverschlüsse mehr aufgenommen werden.

Hierdurch wird es weiterhin vermieden, dass befüllte, zu verschließende Behälter beschädigt werden und den Reinraum der Getränkeabfüllanlage durch Produkt und/oder Scherben verschmutzt wird. Dadurch können auch unerwünschte Standzeiten zur Reinigung der Anlage reduziert oder gar vermieden werden.

Durch die Vorspannung in Öffnungsrichtung kann auch erreicht werden, dass das Schließen des Greifmechanismus aktiv betrieben werden muss, nämlich über die Ansteuerung einer Ansteuerungsvorrichtung. Mit anderen Worten kann das Greifen und Lösen der Behälterverschlüsse aktiv betrieben werden, so dass sich hieraus eine verbesserte Ansteuerung ergeben kann. Aufgrund des aktiven Schließens des Greifmechanismus kann auch die auf einen Behälterverschluss aufgebrachte Haltekraft aktiv variiert werden und an unterschiedliche Behälterverschlusstypen, Geometrien und Materialkombinationen angepasst werden kann. Damit kann das Aufbringen zu hoher Haltekräfte mit den damit einhergehenden Effekten wie Verformen oder Verkratzen des Behälterverschlusses verringert oder gar vermieden werden. Es kann entsprechend eine möglichst schonende Handhabung des Behälterverschlusses bei gleichzeitig sicherem Verschließen des Behälters erreicht werden.

In einer bevorzugten Ausführungsform ist das Vorspannelement eine Druckfeder.

Dadurch, dass das Vorspannelement, bevorzugt eine Druckfeder, im Betätigungszylinder angeordnet ist, kann die Anzahl schwer zu reinigender Teile im Reinraum reduziert werden, da der Betätigungszylinder an sich eine Kapselung der Druckfeder bereitstellt.

Der Betätigungszylinder ist in einigen Anlagenkonzepten auch außerhalb des Reinraums angebracht, so dass auf diese Weise auch das Vorspannelement außerhalb des Reinraums angeordnet wird, was aus hygienischen Gesichtspunkten angebracht sein kann. Dadurch, dass das Vorspannelement im Betätigungszylinder angeordnet ist, wird die Reinigungsfähigkeit des Verschließerkopfes erheblich verbessert. Diese Anordnung eignet sich damit besonders für den Einsatz in aseptischen Getränkeabfüllanlagen.

Der beschriebene Verschließerkopf mit dem beziehungsweise den in Öffnungsrichtung vorgespannten Greifarmen kann besonders vorteilhaft auch mit den folgenden Ausführungsformen, in denen die Haltebacken und/oder die Lagerungen und/oder die Anschläge mittels vorgespannter Druckstifte verriegelt sind, kombiniert werden.

Entsprechend wird vorzugsweise ein Verschließerkopf zum Verschließen eines Behälters mit einem Behälterverschluss, bevorzugt zum Verschließen eines Behälters mit einem Schraubverschluss in einer Getränkeabfüllanlage, vorgeschlagen, welcher einen Greifmechanismus zum Greifen des Behälterverschlusses mit mindestens einem um eine Lagerung schwenkbaren Greifarm und einer an dem mindestens einen Greifarm angeordneten Haltebacke zum Halten des Behälterverschlusses umfasst. Die Haltebacke am Greifarm mittels eines vorgespannten Druckstifts verriegelt.

Dadurch, dass die Haltebacke an dem Greifarm mittels eines vorgespannten Druckstifts verriegelt ist, kann ein Verschließerkopf bereitgestellt werden, bei welchem ein schnelles Wechseln der Haltebacke bei gleichzeitig sicherer Verriegelung im Verschließbetrieb ermöglicht wird. Mit anderen Worten wird durch den vorgespannten Druckstift ein Schnellwechselmechanismus bereitgestellt, mittels welchem die Haltebacke schnell und einfach gewechselt werden kann. Bevorzugt kann der Wechsel der Haltbacke hierbei werkzeugfrei erfolgen.

Durch das Austauschen einer an dem Verschließerkopf angeordneten Haltebacke mit einer Haltebacke, welche für das Greifen eines anderen Behälterverschlusstyps geeignet ist, kann somit ein schnelles und einfaches Umrüsten des Verschließerkopfs zum Verschließen eines Behälters von einem Behälterverschlusstyp zu einem anderen Behälterverschlusstyp erreicht werden.

Für einen Einbau, Ausbau oder Austausch der Haltebacke kann der Druckstift dabei entgegen seiner Vorspannung in axialer Richtung bewegt werden, was zu einem Lösen der Verriegelung, mit welcher der vorgespannte Druckstift die Haltebacke am Greifarm verriegelt, führt. Somit kann die Haltebacke schnell und einfach an dem Greifarm eingebaut, ausgebaut und/oder gewechselt werden.

Ferner kann durch einen Verschließerkopf mit einem solchen Aufbau eine Reduzierung aller für eine Reinigung nicht und/oder nur schwer zugänglichen Bereiche erreicht werden.

Der Einbau, Ausbau oder Austausch der Haltebacke kann weiterhin in allen Bereichen einer den Verschließerkopf aufweisenden Maschine und/oder Anlage erfolgen. Insbesondere kann im Falle der Verwendung des Verschließerkopfs in einer aseptischen Anlage der Austausch der Haltebacke von einem Reinraumfenster aus erfolgen. Dadurch kann ein Bediener die Haltebacke wechseln, ohne in den Reinraum eintreten zu müssen, so dass die Rüstzeiten reduziert werden können.

Somit ist bei einer Maschine und/oder einer Anlage, welche einen solchen Verschließerkopf aufweist, die notwendige Stillstandzeit für einen Einbau, Ausbau oder Austausch der Haltebacke reduziert.

Bevorzugt ist der Greifarm hierbei mittels der Lagerung schwenkbar an einer Greifmechanismushalterung gelagert, wobei sich der Greifmechanismus bevorzugt an einem unteren Ende des Verschließerkopfs befindet.

Unter der Bezeichnung "*oben*" beziehungsweise "oberes *Ende"* wird hier in Längsachse des Verschließerkopfs gesehen jene Seite verstanden, an welcher der Verschließerkopf mit einer Maschine oder einer Anlage verbunden ist. Dementsprechend wird unter der Bezeichnung *"unten"* beziehungsweise *"unteres Ende"* die der Verbindung zur Maschine oder zur Anlage abgewandte Seite verstanden, welche zum zu verschließenden Behälter hin gerichtet ist. Da beim Verschließen von Behältern aufgrund der Gravitation die unverschlossenen Behälter stets aufrecht, also mit der nicht verschlossenen Mündung nach oben, transportiert werden, sind die Begriffe "*oben"* und *"unten"* auch hierdurch klar definiert.

An der Lagerung und/oder der Gelenkverbindung sind in einer bevorzugten Ausführungsvariante ferner Spülöffnungen vorgesehen, bevorzugt in Achsaufnahmen der Lagerung und/oder der Gelenkverbindung.

In einer bevorzugten Weiterbildung ist auch die Lagerung des Greifarms mittels des vorgespannten Druckstifts verriegelt.

Dadurch, dass die Lagerung des Greifarms mittels des vorgespannten Druckstifts verriegelt ist, kann auch der Greifarm schnell und einfach, bevorzugt werkzeugfrei, gewechselt werden. Ferner kann der Aufbau der Lagerung zum Lagern des Greifarms einfach bereitgestellt werden, da aufgrund des Verriegelns der Lagerung durch den vorgespannten Druckstift die Lagerung gegen ein Lösen des Greifarms gesichert wird, ohne den Greifarm in seinem Vermögen, um die Lagerung zu schwenken, einzuschränken. Somit sind keine zusätzlichen Teile, welche eine Reinigung des Verschließerkopfs erschweren könnten, zur Verriegelung der Lagerung notwendig.

In einer bevorzugten Ausführungsform ist der Greifarm mit einem Steuerelement zum Steuern des Schwenkens des Greifarms durch eine Gelenkverbindung gelenkig verbunden und die Gelenkverbindung zwischen dem Greifarm und dem Steuerelement ist durch den vorgespannten Druckstift verriegelt.

Hierdurch kann auch der Greifarm schnell und einfach, bevorzugt werkzeugfrei, gewechselt werden, da zum Entriegeln der Gelenkverbindung lediglich der vorgespannte Druckstift zu betätigen beziehungsweise zu entfernen ist. Ferner kann ein einfacher Aufbau der Gelenkverbindung bereitgestellt werden, da aufgrund des Verriegelns der Gelenkverbindung durch den vorgespannten Druckstift die Gelenkverbindung gegen ein Lösen von dem Greifarm gesichert wird, ohne den Greifarm in seinem Vermögen, sich in der Gelenkverbindung gelenkig zu bewegen, einzuschränken. Somit sind keine zusätzlichen Teile, welche eine Reinigung des Verschließerkopfs erschweren könnten, zum gelenkigen Verbinden des Greifarms mit der Gelenkverbindung notwendig.

In einer weiteren bevorzugten Variante ist ein mittels des vorgespannten Druckstifts in Position gehaltenes Stiftelement zum Verriegeln des Greifarms an der Lagerung und/oder zum Sichern der Gelenkverbindung gegen ein Lösen bereitgestellt, wobei das Stiftelement bevorzugt in einer Stiftaufnahmebohrung im Inneren des Greifarms aufgenommen ist.

Dadurch, dass ein mittels des vorgespannten Druckstifts in Position gehaltenes Stiftelement zum Verriegeln des Greifarms an der Lagerung und/oder zum Sichern der Gelenkverbindung gegen ein Lösen bereitgestellt ist, kann der Druckstift bezüglich seiner Abmaße kleiner bereitgestellt werden, da der vorgespannte Druckstift zum Verriegeln der Lagerung und/oder der Gelenkverbindung lediglich das Stiftelement in Position zu halten hat. Bevorzugt kann hierdurch auch ein Austausch der Haltebacke erfolgen, ohne, dass dies einen Einfluss auf die Verriegelung der Gelenkverbindung und/oder der Lagerung hat. So kann der Austausch der Haltebacke durch ein axiales Verschieben des vorgespannten Druckstifts entgegen seiner Vorspannung erfolgen und das Lösen der Verriegelung der Lagerung und/oder der Gelenkverbindung durch einen Ausbau des Druckstifts erfolgen, wobei durch den Ausbau des Druckstifts eine Änderung der Position des Stiftelements bereitgestellt sein kann.

Dadurch, dass das Stiftelement bevorzugt in einer Stiftaufnahmebohrung im Inneren des Greifarms aufgenommen ist, kann erreicht werden, dass das Stiftelement sicher in seiner Position gehalten ist. Ferner entsteht durch diese Anordnung kein erhöhter Reinigungsaufwand des Verschließerkopfs.

In einer bevorzugten Ausgestaltung weist der Druckstift einen zylindrischen Schaft und einen Kopfbereich mit einem im Vergleich zu dem zylindrischen Schaft vergrößerten Außendurchmesser auf, wobei der zylindrische Schaft einen Verriegelungsbereich zum Erzeugen eines Formschlusses mit einer an der Haltebacke angeordneten Aussparung zum Aufnehmen des Verriegelungsbereiches aufweist, wobei der Verriegelungsbereich bevorzugt den Außendurchmesser des Kopfbereichs aufweist. Die Aussparung bildet in Auszugsrichtung der Haltebacke bevorzugt einen Hinterschnitt aus, so dass eine formschlüssige Verriegelung einfach möglich ist.

Dadurch, dass der Druckstift einen zylindrischen Schaft und einen Kopfbereich mit einem im Vergleich zu dem zylindrischen Schaft vergrößerten Außendurchmesser aufweist, wobei der zylindrische Schaft einen Verriegelungsbereich zum Erzeugen eines Formschlusses mit einer an der Haltebacke angeordneten Aussparung zum Aufnehmen des Verriegelungsbereiches aufweist, kann ein sicheres Halten der Haltebacke durch den vorgespannten Druckstift bereitgestellt werden. Der Verriegelungsbereich des Druckstifts kann dabei durch ein axiales Verschieben des Druckstifts entgegen der Vorspannung bevorzugt aus dem Bereich der Aussparung geschoben werden, so dass hierdurch der Formschluss aufgehoben wird und die Haltebacke aus dem Greifarm entfernt werden kann. In Einbaulage kann der Verriegelungsbereich mittels der Vorspannung in die Aussparung gedrückt werden, wodurch der Formschluss geschlossen und die Haltebacke am Greifarm arretiert werden kann. Die Betätigung in axialer Richtung des vorgespannten Druckstifts kann dabei bevorzugt werkzeugfrei erfolgen.

Die Haltebacke weist bevorzugt einen die Aussparung aufweisenden, einen runden, elliptischen oder polygonalen Querschnitt aufweisenden Einführbereich auf, welcher in den Greifarm eingeführt wird. Bevorzugt weist der Einführbereich einen Einführschlitz auf, durch welchen der Schaft des Druckstifts beim Einführen der Haltebacke in den Greifarm geschoben werden kann.

In einer weiteren bevorzugten Ausführungsform ist zum Vorspannen des Druckstifts ein Vorspannelement, bevorzugt ein Elastomer und/oder eine Feder, besonders bevorzugt eine Druckfeder, bereitgestellt.

Dadurch, dass zum Vorspannen des Druckstifts ein Vorspannelement, bevorzugt ein Elastomer und/oder eine Feder, besonders bevorzugt eine Druckfeder, bereitgestellt ist, kann ein einfaches und sicheres Vorspannen des Druckstifts bereitgestellt werden. Ferner kann hierdurch im Zuge der Auslegung des Verschließerkopfs die auf den Druckstift in einem Einbauzustand wirkende Vorspannung bestimmt beziehungsweise berechnet werden. Weiterhin kann die Vorspannung dauerhaft bereitgestellt werden.

Bevorzugt ist das Vorspannelement hierbei rotationssymmetrisch um die Längsachse des Druckstifts angeordnet, besonders bevorzugt um den zylindrischen Bereich des Druckstifts. Dadurch kann eine gleichmäßig auf den Druckstift wirkende Vorspannung sowie eine sichere Lage des Vorspannelements zu dem Druckstift bereitgestellt werden.

In einer weiteren bevorzugten Ausgestaltung ist am Kopfbereich des Druckstifts und/oder zwischen Haltebacke und Greifarm eine Dichtung zum Abdichten des Greifarminneren gegen die Umgebung bereitgestellt.

Dadurch, dass am Kopfbereich des Druckstifts und/oder zwischen Haltebacke und Greifarm eine Dichtung zum Abdichten des Greifarminneren gegen die Umgebung bereitgestellt ist, kann eine weiterhin verbesserte Reinigungsfähigkeit des Verschließerkopfs bereitgestellt werden. Das Greifarminnere und/oder insbesondere Bereiche, welche bei einer Reinigung von einer Reinigungseinrichtung nicht ausreichend erfasst werden können, um einen ausreichenden Reinigungseffekt bereitzustellen, werden durch die Dichtung gegen die Umgebung abgedichtet. Ferner wird durch das Vorsehen der Dichtung verhindert, dass sich in den abgedichteten Bereichen aus dem zu verschließenden Behälter ausschwappendes Füllgut oder anderweitige Verunreinigungen festsetzen beziehungsweise ablagern können.

In einer weiter bevorzugten Ausführungsform weist die Lagerung einen Lagerbolzen auf, um welchen der Greifarm schwenkbar ist und welcher in seiner Längsachse mittels des vorgespannten Druckstifts in einer festen Position gehalten ist.

Dadurch, dass die Lagerung einen Lagerbolzen aufweist, um welchen herum der Greifarm schwenkbar ist und welcher in seiner Längsachse mittels des vorgespannten Druckstifts in einer festen Position gehalten ist, kann eine sehr einfache und stabile Lagerung bereitgestellt werden. Ferner ist eine solche Lagerung einfach abzudichten, bevorzugt über das Vorsehen von Dichtringen zwischen dem Lagerbolzen und seinen Aufnahmen.

Das Halten des Lagerbolzens durch den Druckstift in der festen Position kann durch das Vorsehen einer Aussparung, bevorzugt einer Nut, bereitgestellt sein, in welche der Druckstift formschlüssig greift. Alternativ kann die Aussparung, bevorzugt die Nut, auch mit dem durch den Druckstift positionierten Stiftelement oder einem weiteren Element, welches dem Druckstift zum Verriegeln der Lagerung dient, interagieren.

In einer bevorzugten Ausgestaltung weist die Gelenkverbindung einen Verbindungsbolzen auf, welcher in seiner Längsachse mittels des vorgespannten Druckstifts in einer festen Position gehalten ist.

Dadurch, dass die Gelenkverbindung einen Verbindungsbolzen aufweist, welcher in seiner Längsachse mittels des vorgespannten Druckstifts in einer festen Position gehalten ist, kann eine sehr einfache und stabile gelenkige Verbindung bereitgestellt werden. Ferner ist eine solche Gelenkverbindung einfach abzudichten, bevorzugt über das Vorsehen von Dichtringen zwischen dem Verbindungsbolzen und seinen Aufnahmen.

Das Halten des Verbindungsbolzens durch den Druckstift in der festen Position kann durch das Vorsehen der Aussparung, bevorzugt der Nut, bereitgestellt sein, in welche der Druckstift formschlüssig greift. Alternativ kann die Aussparung, bevorzugt die Nut, auch mit dem durch den Druckstift positionierten Stiftelement oder einem weiteren Element, welches dem Druckstift zum Verriegeln der Gelenkverbindung dient, interagieren.

In einer bevorzugten Weiterführung weist der Druckstift eine Sicherungsanordnung auf, welche ein axiales Verschieben des Druckstifts ermöglicht und ein Sichern des Druckstifts gegen ein Herausrutschen aus dem Greifarm bereitstellt, und welche bevorzugt eine Schraube, eine Kugel und eine senkrecht zu der Längsachse des Druckstifts angeordnete Gewindebohrung zum Aufnehmen der Schraube und der Kugel umfasst.

Dadurch, dass der Druckstift eine Sicherungsanordnung aufweist, welche ein axiales Verschieben des Druckstifts ermöglicht und ein Sichern des Druckstifts gegen ein Herausrutschen aus dem Greifarm bereitstellt, kann erreicht werden, dass der Druckstift in axialer Richtung beweglich ist. Folglich kann der Druckstift innerhalb des durch die Sicherungsanordnung bereitgestellten Bewegungsbereichs aus einer Position, in welcher die Haltebacke verriegelt ist, gegen die Vorspannung in eine Position, in welcher die Haltebacke entriegelt ist, bewegt werden.

Umfasst die Sicherungsanordnung eine Schraube, eine Kugel und eine senkrecht zu der Längsachse des Druckstifts angeordneten Gewindebohrung zum Aufnehmen der Schraube und der Kugel, so kann eine besonders einfache und zuverlässige Sicherungsanordnung bereitgestellt werden. Die Kugel und die Schraube befinden sich dabei in einem nicht eingebauten Zustand in der Gewindebohrung. Nach Einführen des Druckstifts in den Greifarm kann die Schraube angezogen werden, so dass die Kugel teilweise aus dem Druckstift austritt und bevorzugt in eine Sicherungsaussparung des Greifarms greift, welche sich in axialer Richtung des Druckstifts erstreckt. Im Bereich der Sicherungsaussparung kann der Druckstift, bevorzugt durch ein Abrollen der Kugel zwischen Schraube und Sicherungsaussparung, axial verschoben werden. Ein Herausfallen des Druckstifts kann durch einen Formschluss in axialer Richtung des Druckstifts, welcher über einen Kontakt der Kugel mit einer Wand der Sicherungsaussparung und mit der Gewindebohrung gebildet ist, verhindert werden.

In einer weiter bevorzugten Ausführungsvariante weist der Greifarm eine Bohrung zum Aufnehmen des Druckstifts auf.

Dadurch, dass der Greifarm eine Bohrung zum Aufnehmen des Druckstifts aufweist, kann ein besonders leicht zu reinigender Verschließerkopf bereitgestellt werden, da lediglich eine Bohrungsöffnung abzudichten ist, der Greifarm ansonsten aber keine Bereiche aufweist, an welchen sich Fremdstoffe ablagern können oder welche nur unzureichend von der Reinigungseinrichtung erreicht werden können. Ferner ist hierdurch eine sichere Aufnahme und Positionierung des Druckstifts bereitgestellt.

Vorzugsweise wird ein Verschließerkopf zum Verschließen eines Behälters mit einem Behälterverschluss, bevorzugt zum Verschließen eines Behälters mit einem Schraubverschluss in einer Getränkeabfüllanlage, vorgeschlagen, welcher eine Greifmechanismushalterung und einen Anschlag zum Positionieren des Behälterverschlusses in axialer Richtung des Behälterdeckels umfasst. Der Anschlag mittels eines vorgespannten Druckstifts an der Greifmechanismushalterung verriegelt.

Dadurch, dass der Anschlag mittels des vorgespannten Druckstifts an der Greifmechanismushalterung verriegelt ist, kann ein Verschließerkopf, bei welchem ein Schnellwechseln des Anschlags ermöglicht ist, bereitgestellt werden. Mit anderen Worten ist durch den vorgespannten Druckstift ein Schnellwechselmechanismus bereitgestellt, mittels welchem der Anschlag schnell und einfach gewechselt werden kann. Bevorzugt kann der Wechsel des Anschlags hierbei werkzeugfrei erfolgen. Durch das Austauschen des Anschlags mit einem Anschlag, welcher für das Positionieren eines anderen Behälterverschlusstyps geeignet ist, kann ein schnelles und einfaches Umrüsten des Verschließerkopfs bereitgestellt werden.

Für einen Einbau, Ausbau oder Austausch des Anschlags kann der Druckstift dabei entgegen seiner Vorspannung in axialer Richtung bewegt werden, was zu einem Lösen der Verriegelung, mit welcher der vorgespannte Druckstift den Anschlag an der Greifmechanismushalterung verriegelt, führt. Somit kann der Anschlag schnell und einfach an der Greifmechanismushalterung eingebaut, ausgebaut und/oder gewechselt werden.

Ferner kann durch einen Verschließerkopf mit einem solchen Aufbau eine Reduzierung aller für eine Reinigung nicht und/oder nur schwer zugänglichen Bereiche auf ein Minimum reduziert bereitgestellt werden.

Der Einbau, Ausbau oder Austausch des Anschlags kann weiterhin in allen Bereichen einer den Verschließerkopf aufweisenden Maschine und/oder Anlage erfolgen. Insbesondere kann im Falle der Verwendung des Verschließerkopfs in einer aseptischen Anlage der Austausch des Anschlags von einem Reinraumfenster aus erfolgen. Dadurch kann ein Bediener den Anschlag wechseln, ohne den Reinraum betreten zu müssen.

In einer weiter bevorzugten Ausführungsform ist am Anschlag eine Dichtung zum Abdichten einer Anschlagaufnahmetasche gegen die Umgebung bereitgestellt und/oder am Druckstift eine Dichtung zum Abdichten des Inneren der Greifmechanismushalterung gegen die Umgebung bereitgestellt.

Dadurch, dass am Anschlag eine Dichtung zum Abdichten einer Anschlagaufnahmetasche gegen die Umgebung bereitgestellt ist und/oder am Druckstift eine Dichtung zum Abdichten des Inneren der Greifmechanismushalterung gegen die Umgebung bereitgestellt ist, kann eine weiterhin verbesserte Reinigungsfähigkeit des Verschließerkopfs bereitgestellt werden. Das Innere der Greifmechanismushalterung und/oder insbesondere der Bereiche, welche bei einer Reinigung von der Reinigungseinrichtung nicht ausreichend erreicht werden können um einen ausreichenden Reinigungseffekt bereitzustellen, werden durch die Dichtung gegen die Umgebung abgedichtet. Ferner wird durch das Vorsehen der Dichtung verhindert, dass sich in den abgedichteten Bereichen aus dem zu verschließenden Behälter ausschwappendes Füllgut oder anderweitige Verunreinigungen festsetzen beziehungsweise ablagern können.

In einer weiteren bevorzugten Ausführungsform aller vorstehend beschriebenen Verschließerköpfe ist der Greifarm durch ein Vorspannelement, bevorzugt eine Druckfeder, in Öffnungsrichtung vorgespannt. Auf diese Weise kann erreicht werden, dass im Betrieb beim Verlust der Ansteuerung des Greifmechanismus des Verschließerkopfes Kollisionen und Beschädigungen der Anlage vermieden werden können. Insbesondere kann bei einem Ausfall des Arbeitsmediums für den Greifmechanismus, beispielsweise einem Ausfall der Pneumatikluft, vermieden werden, dass durch den Greifmechanismus gehaltene Behälterverschlüsse mit bereits verschlossenen Behältern kollidieren oder ein im Greifmechanismus gehaltener Behälterverschluss mit einem auf einem Pickrad bereitgestellten neuen Behälterverschluss kollidiert. Durch die Vorspannung des Greifmechanismus in Öffnungsrichtung kann erreicht werden, dass beim Verlust der Ansteuerung, beispielsweise beim Verlust der Pneumatikluft, aufgenommene Behälterverschlüsse durch das vorspannungsbedingte Öffnen des Greifmechanismus herabfallen und keine neuen Behälterverschlüsse mehr aufgenommen werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1A: schematisch eine perspektivische Seitenansicht eines Verschließerkopfs mit einem federschließenden Greifmechanismus;
- Figur 1B: schematisch eine perspektivische Seitenansicht eines Verschließerkopfs mit einem federöffnenden Greifmechanismus;
- Figur 2A: schematisch eine Schnittansicht des Verschließerkopfs aus Figur 1A entlang der Schnittlinie A-A;
- Figur 2B: schematisch eine Schnittansicht des Verschließerkopfs aus Figur 1B entlang der Schnittlinie A-A;
- Figur 3: Detailansicht Z einer Haltebacke aus Figur 2A;
- Figur 4: den Verschließerkopf aus Figur 1A in einer schematischen Schnittansicht entlang der Schnittlinie B-B aus Figur 1A;
- Figur 5: eine teilgeschnittene, perspektivische Ansicht einer Haltebacke und eines Druckstifts;
- Figur 6: einen Verschließkopf zum Aufbringen eines Behälterverschlusses auf einen zu verschließenden Behälter;
- Figur 7: eine schematische Schnittansicht des Verschließkopfs aus Figur 6;
- Figur 8: eine schematische Darstellung eines Betätigungszylinders; und
- Figur 9: eine schematische Schnittansicht durch den Betätigungszylinder aus Figur 8.

### Detaillierte Beschreibung bevorzugter Ausführungsbeispiele

Im Folgenden werden bevorzugte Ausführungsbeispiele anhand der Figuren beschrieben. Dabei werden gleiche, ähnliche und gleichwirkende Elemente mit identischen Bezugszeichen bezeichnet. Um Redundanzen zu vermeiden, wird auf die wiederholte Beschreibung dieser Elemente in der nachfolgenden Beschreibung teilweise verzichtet.

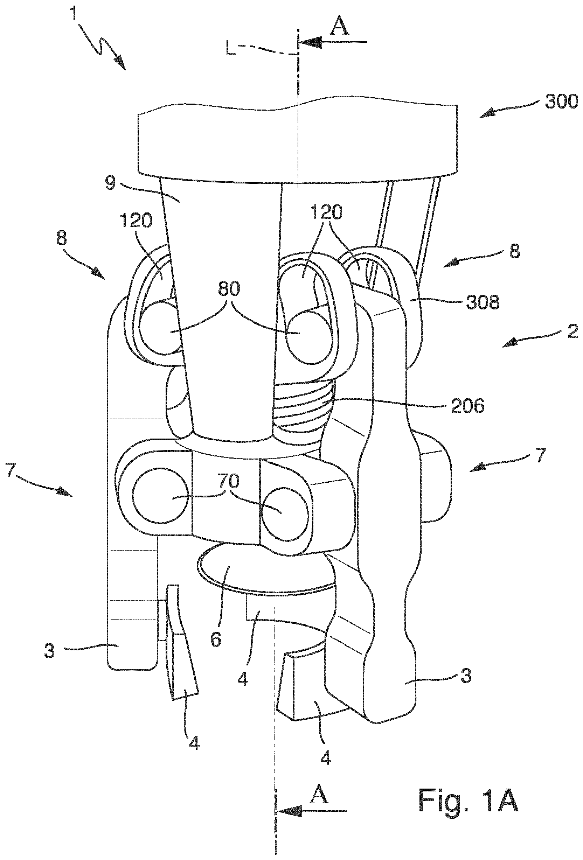

Figur 1A zeigt schematisch eine perspektivische Seitenansicht eines Verschließerkopfs 1 mit einem federschließenden Greifmechanismus 2 zum Greifen und Halten eines Behälterverschlusses 17 beim Verschließen eines zu verschließenden Behälters. Der Verschließerkopf 1 erstreckt sich entlang einer Längsachse L. Diese Längsachse L definiert auch die Symmetrieachse des Verschlusses 17 und fällt bei einem Schraubverschluss mit der Rotationsachse des Schraubverschlusses beim Aufschrauben auf den Behälter und damit während des Aufschraubens auch mit der Behälterachse zusammen.

An einer am Verschließerkopf 2 vorgesehenen Greifmechanismushalterung 9 sind drei Greifarme 3 um den Umfang des Verschließerkopfs 1 herum gleichmäßig verteilt und jeweils mittels einer Lagerung 7 schwenkbar an der Greifmechanismushalterung 9 angeordnet. Die einzelnen Greifarme 3 schließen somit in einer Ebene senkrecht zur Längsachse L zu den jeweils benachbarten Greifarmen 3 jeweils einen Winkel von 120° ein. Die Lagerung 7 ist in dieser Ausführung als Bolzenlagerung mit einem Lagerbolzen 70 ausgeführt. Alternativ können aber auch andere Lagerformen oder -varianten Anwendung finden.

An dem unteren Ende jedes Greifarms 3 ist jeweils eine Haltebacke 4 angeordnet, wobei der Verschließerkopf 1 mit den Haltebacken 4 einen auf den zu verschließenden Behälter aufzubringenden Behälterverschluss 17 greifen und halten kann. Die Greifarme 3 sind an ihrem oberen Ende über eine Gelenkverbindung 8 mit einem Steuerelement 308 zum Steuern des Greifmechanismus 2 gelenkig verbunden. Zur Ausbildung der gelenkigen Verbindung ist an jedem Greifarm 3 ein Verbindungsbolzen 80 angeordnet, welcher in jeweils zwei beidseitig eines jeden Greifarms 3 angeordnete Langlochschlaufen 120 des Steuerelements 308 greift. Die Langlochschlaufen 120 sind hierbei derart geformt, dass der Verbindungsbolzen 80 entlang der jeweiligen Langlöcher gleiten kann.

Die Langlochschlaufen 120 des Steuerelements 308 sind bezüglich der Längsachse L schräg orientiert. Damit liegen die oberen Enden der Langlochschlaufen 120 näher an der Längsachse L, als deren untere Enden. Entsprechend sind die oberen Enden der Langlochschlaufen 120 auf einem Kreis angeordnet, welcher einen kleineren Radius aufweist, als der Kreis, auf welchem die unteren Enden der Langlochschlaufen 120 angeordnet sind. Durch diese Anordnung der Langlochschlaufen 120 befindet sich der Greifmechanismus 2 entsprechend in einem geschlossenen Zustand, wenn sich die Verbindungsbolzen 80, wie in Figur 1A gezeigt, an den jeweils unteren Enden der Langlochschlaufen 120 befinden. Die Verbindungsbolzen 80 werden durch die Langlochschlaufen 120 nämlich auf den größeren Radius nach außen hin gedrückt, so dass die Greifarme 3 um die Lagerbolzen 70 herum so rotiert werden, dass die Haltebacken 4 in der geschlossenen Position angeordnet sind. Durch ein entsprechendes Verschieben der Verbindungsbolzen 80 entlang der Langlochschlaufen 120 nach oben hin durch ein Anheben des Steuerelements 308 kann der Greifmechanismus entsprechend geöffnet werden, da die Verbindungsbolzen 80 durch die Langlochschlaufen 120 dann auf einen kleineren Radius gezwungen werden und die Greifarme 3 entsprechend um die Lagerbolzen 70 herum in die geöffnete Position verschwenken.

Die Langlochschlaufen 120 sind bevorzugt linear ausgeprägt. In Abhängigkeit des gewünschten Bewegungsprofils der Greifarme 3 können jedoch alternativ gekrümmte Langlochschlaufen 120 zum Einsatz kommen, um unterschiedliche Abhängigkeiten zwischen der Höhenposition des Steuerelements 308 und der jeweiligen Öffnungsposition der Haltebacken 4 zu erreichen.

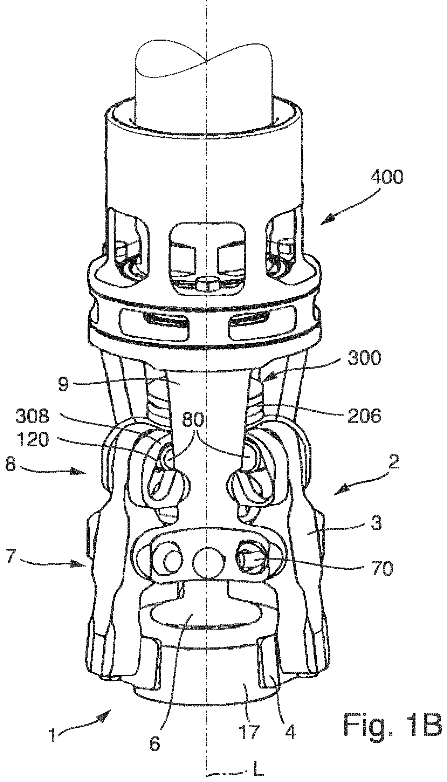

Das Steuerelement 308 ist in dieser federschließenden Ausführung des Verschließerkopfes 1 durch eine konzentrisch zur Längsachse L angeordnete Druckfeder 302 zur Oberseite des Verschließerkopfs 1 hin gedrückt, so dass sich in der in Figur 1 gezeigten Situation die Verbindungsbolzen 80 am unteren Ende der Langlochschlaufen 80 befinden und sich die Greifarme 3 und damit auch die Haltebacken 4 in der geschlossenen Position befinden, in der ein Behälterverschluss gegriffen werden könnte. Durch die federschließende Ausbildung würde der Behälterverschluss aufgrund der Federspannung der Druckfeder 302 auch ohne weitere Ansteuerung des Steuerelements 308 sicher zwischen den Haltebacken 4 gehalten werden.

Oberhalb des Steuerelements 308 ist ein Betätigungszylinder konzentrisch zur Längsachse L angeordnet. Fährt der Betätigungszylinder aus, drückt er auf das Steuerelement 308 und bewegt dieses entgegen der durch das Vorspannelement 32 aufgebrachten Federspannung in Richtung der Unterseite des Verschließerkopfs 1. Dadurch wandern die Verbindungsbolzen 80 in den Langlochschlaufen 120 in Richtung deren oberer Enden, was ein Verschwenken der Greifarme 3 bewirkt. Da sich die oberen Enden der Langlochschlaufen 120 näher an der Längsachse L befinden, schwenken die Greifarme 3 um die Lagerung 7, so dass die Haltebacken 4 nach außen bewegt werden und sich der Greifmechanismus 2 folglich in einer geöffneten Position befindet.

Zur Positionierung des zu greifenden Behälterverschlusses ist an der Greifmechanismushalterung 9 ein Anschlag 6 angeordnet. Bei einem Greifen des Behälterverschlusses kommt der Anschlag 6 mit der Oberseite des Behälterverschlusses in Kontakt, so dass dieser bezüglich der Längsachse L in seiner Lage bestimmt ist und ein sicheres Halten des Behälterverschlusses durch die Haltebacken 4 mit einer korrekten Lage des Behälterverschlusses erreicht wird.

In Figur 1B ist in einer Alternative ein Verschließerkopf 1 gezeigt, der einen federöffnenden Greifmechanismus aufweist. Dieser Verschließerkopf 1 weist im Prinzip die gleichen Elemente auf, wie der in Figur 1A gezeigte. Das Steuerelement 308 ist hier jedoch in Öffnungsrichtung der Greifarme 3 vorgespannt, ist also nach unten hin vorgespannt. Diese Position ist in 1B gezeigt und die Greifarme 3 sind nach außen hin verschwenkt, so dass der Greifmechanismus geöffnet ist und die Greifarme 3, wie in der Figur 1B gezeigt, über den Behälterverschluss 17 geführt werden können. Mit anderen Worten befindet sich der Greifmechanismus ohne das Aufbringen einer weiteren Ansteuerung in der geöffneten Position, so dass ein Behälterverschluss aus dem Greifmechanismus herausfallen würde.

Mittels einer Ansteuervorrichtung 300, die in dem gezeigten Ausführungsbeispiel einen Betätigungszylinder aufweist, kann nun das Steuerelement 308 aktiv nach oben bewegt werden, um ein aktives Schließen der Greifarme 3 durch Verschwenken um die Lagerbolzen 70 herum zu erreichen. Mittels der Ansteuervorrichtung 300 kann damit das Steuerelement 308 aktiv angesteuert werden, so dass die Greifarme 3 in die Verschlussrichtung verschwenkt werden und ein Behälterverschluss entsprechend zwischen den Haltebacken 4 gehalten werden kann. Die Stärke der durch die Haltebacken 4 aufgebrachten Klemmung wird durch die Ansteuervorrichtung 300 und insbesondere durch den Betätigungszylinder vorgegeben.

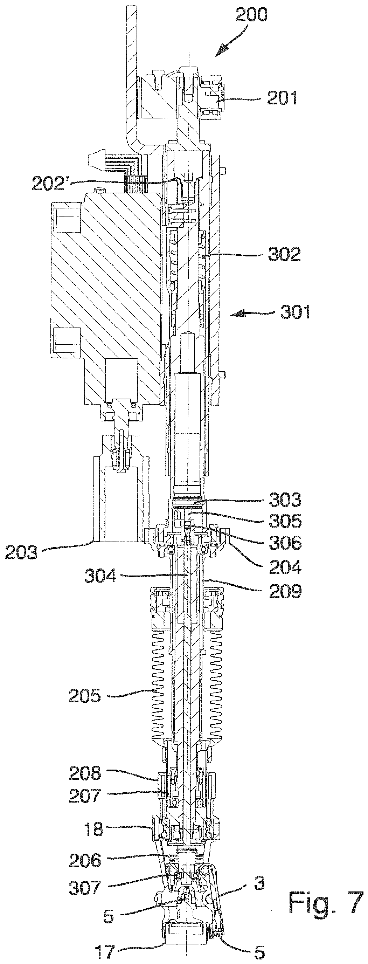

Ein Vorspannelement 302 zum Aufbringen der Vorspannung in Öffnungsrichtung ist, wie beispielsweise auch in Figur 7 gezeigt, in Form einer Feder in dem Betätigungszylinder 301 vorgesehen. Das Vorspannelement 302 in Form der Feder wirkt in Öffnungsrichtung auf den Kolben 303 des Betätigungszylinders 301 und damit über eine Betätigungsstange 304 auf das Steuerelement 308. Entsprechend kann wirkt das Vorspannelement 302 direkt auf das Steuerelement 308 und bringt eine Kraft in Öffnungsrichtung auf. Durch Beaufschlagung des Betätigungszylinders 301 mit Pneumatikluft kann der Kolben 303 entgegen der Vorspannung angehoben werden und über die Betätigungsstange 304 wir dann entsprechend das Steuerelement 308 angehoben, so dass ein Verschwenken der Greifarme 3 in die Verschlussrichtung erreicht werden kann und ein Behälterverschluss gehalten werden kann.

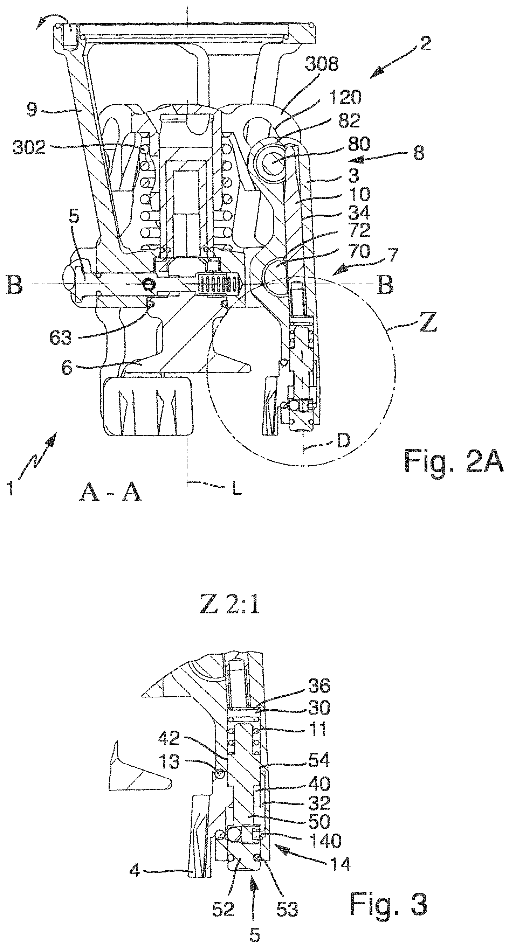

Figur 2A zeigt eine Schnittansicht des Verschließerkopfs 1 mit dem federschließenden Greifmechanismus 2 aus Figur 1A, wobei hier kein zwischen den Greifarmen 3 aufgenommener Behälterverschluss dargestellt ist.

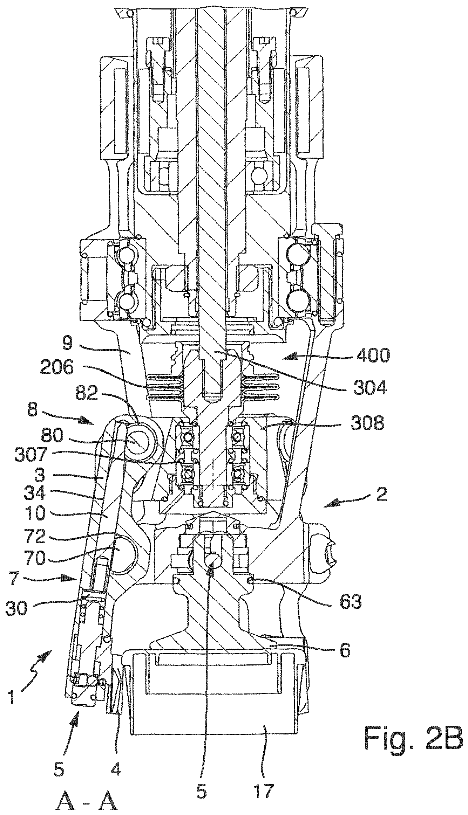

Figur 2B zeigt schematisch eine Schnittansicht des Verschließerkopfs 1 mit federöffnendem Greifmechanismus 2 aus Figur 1B, wobei ein schematisch dargestellter Behälterverschluss 17 durch den Greifmechanismus 2 gehalten ist.

Der Behälterverschluss 17 liegt dabei mit seiner Oberseite an dem Anschlag 6 an und ist durch die drei radial von außen über die Greifarme 3 herangeführten Haltebacken 4 gehalten. Durch die Ansteuerungsvorrichtung 300 wird dabei über das Steuerelement 308 und die Greifarme 3 ein im Zuge der Dimensionierung des Verschließerkopfs 1 bestimmbarer Haltedruck von den Haltebacken 4 auf den Behälterverschluss 17 ausgeübt, welcher ein sicheres Halten des Behälterverschlusses 17 und ein zuverlässiges Verschließen des zu verschließenden Behälters mit dem Behälterverschluss 17 ermöglicht.

Figur 3 zeigt eine Detailansicht Z des Schnellwechselmechanismus der Haltebacken 4 aus Figur 2A. Jeder der Greifarme 3 weist eine Bohrung 30 auf, in welcher ein Druckstift 5 angeordnet ist, welcher einen zylindrischen Schaft 50 und einen Kopfbereich 52 aufweist. Der Kopfbereich 52 des Druckstifts 5 weist hierbei einen im Vergleich zu dem zylindrischen Schaft 50 vergrößerten Außendurchmesser auf. Zwischen dem Kopfbereich 52 und dem Greifarm 3 ist eine Dichtung 53 zum Abdichten der Bohrung 30 gegen die Umgebung bei eingesetztem Druckstift 5 angeordnet.

Ferner ist an dem zylindrischen Schaft 50 des Druckstifts 5 ein Verriegelungsbereich 54 angeordnet, welcher in dem gezeigten Ausführungsbeispiel den Außendurchmesser des Kopfbereichs 50 aufweist. Zwischen dem Verriegelungsbereich 54 und einem Absatz 36 der Bohrung 30 ist ein elastisches Vorspannelement 11 in Form einer Spiralfeder angeordnet. Das Vorspannelement 11 liegt dabei in einem verspannten Zustand vor und drückt somit gegen den Verriegelungsbereich 54 und diesen in eine Richtung aus der Bohrung 30 heraus.

Um den Druckstift 5 an einem völligen Herausbewegen aus der Bohrung 30 zu hindern, ist eine Sicherungsanordnung 14 vorgesehen, welche ein axiales Verschieben des Druckstifts 5 ermöglicht, gleichzeitig aber ein Sichern des Druckstifts 5 gegen ein Herausfallen aus dem Greifarm 3 bereitstellt. Hierbei ist eine Schraube 140 in einer senkrecht zu der Druckstiftachse D des Druckstifts 5 angeordneten Gewindebohrung eingeschraubt und hierdurch eine Kugel positioniert, welche teilweise aus dem Druckstift 5 austritt und in eine Sicherungsaussparung 32 des Greifarms 5 greift, welche sich in axialer Richtung des Druckstifts 5 erstreckt. Im Bereich der Sicherungsaussparung 32 ist der Druckstift 5 durch ein Abrollen der Kugel zwischen der Schraube 140 und der Sicherungsaussparung 32 axial verschiebbar. Ein Herausbewegen des Druckstifts 5 aus der Bohrung 30 ist durch einen Formschluss in axialer Richtung des Druckstifts 11, welchen die Kugel aufgrund eines Kontakts mit einer Seitenwand der Sicherungsaussparung 32, sowie mit einer Wand der Gewindebohrung eingeht, verhindert.

In jedem Greifarm 3 ist die jeweilige Haltebacke 4 mit einem Einführbereich 40 in den Greifarm 3 eingeführt und mittels des vorgespannten Druckstifts 5 verriegelt. Dabei greift der Verriegelungsbereich 54 des Druckstifts 5 in eine komplementäre Aussparung 42 der Haltebacke 4, wobei das Vorspannelement 11 den Verriegelungsbereich 54 in die Aussparung 42 drückt. Dadurch ist ein verspannter Formschluss zwischen dem Druckstift 5 und der Haltebacke 4 bereitgestellt. Zur Abdichtung des Inneren des Greifarms gegen die Umgebung ist zwischen der Haltebacke 4 und dem Greifarm 3 eine Dichtung 13 angeordnet.

Für ein Demontieren der Haltebacke 4 wird der Druckstift 5 entgegen der Vorspannung in Richtung des Vorspannelements 11 axial verschoben. Dadurch wird der Verriegelungsbereich 54 aus der Aussparung 42 heraus geschoben, so dass der Formschluss aufgehoben wird und die Haltebacke 4 aus dem Greifarm 3 herausgezogen werden kann.

Für das Montieren einer weiteren Haltebacke 4 ist der Druckstift 5 entsprechend wiederum in Richtung des Vorspannelements 11 zu verschieben, so dass die Haltebacke 4 in den Greifarm 3 gesteckt werden kann. Nach dem Einstecken der Haltebacke 4 und dem Loslassen des Druckstifts 5 wird dessen Verriegelungsbereich 54 wieder in die Aussparung 42 der Haltebacke 4 gedrückt, wodurch die Haltebacke 4 in dem Greifarm 3 verriegelt ist.

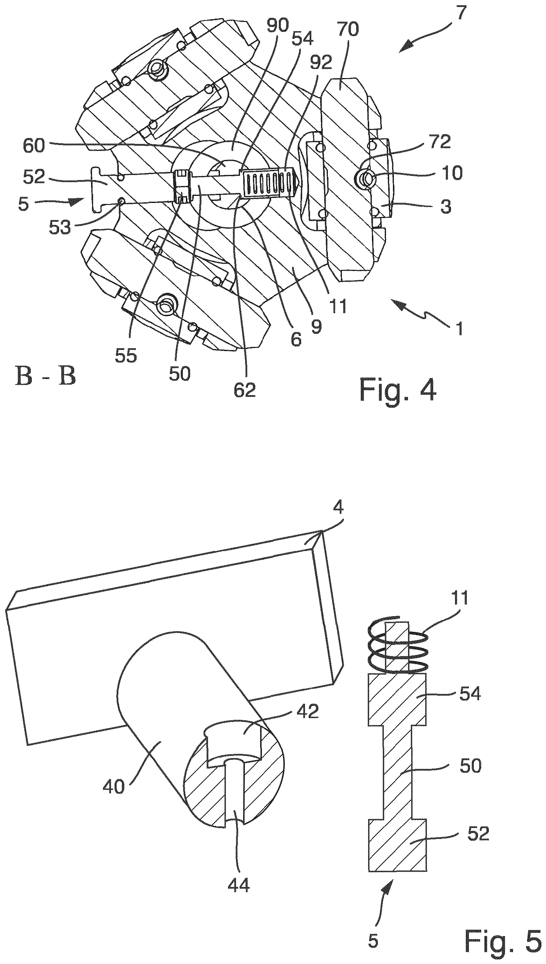

Eine prinzipielle Darstellung der Haltebacke 4 und des Druckstifts 5 ist auch noch einmal in Figur 5 gezeigt, in welcher eine teilgeschnittene perspektivische Darstellung der Haltebacke 4 und des Druckstifts 5 gezeigt ist. Es ergibt sich, dass der Einführbereich 40 der Haltebacke 4 mit einem Einführschlitz 44 versehen ist, der so ausgebildet ist, dass der Schaft 50 des Druckstifts 5 in diesen eingeführt werden kann.

Zum Montieren der Haltebacke 4 wird der Einführbereich 40 entsprechend in die dazu komplementäre Ausnehmung im Greifarm 3 eingeführt. Der Einführbereich 40 ist in der Figur 5 mit einem runden Querschnitt gezeigt, er kann aber auch einen elliptischen oder polygonalen Querschnitt aufweisen - beispielsweise um eine Verdrehsicherung bereit zu stellen. Beim Einführen des Einführbereichs 40 in den Greifarm 3 schiebt sich der Einführschlitz 44 über den Schaft 50 des Druckstifts 5. Der Druckstift 5 ist beim Montieren der Haltbacke 4 entsprechend soweit entgegen der Vorspannung des Vorspannelements 11 in die Bohrung 30 eingedrückt, dass der Verriegelungsbereich 54 soweit angehoben ist, dass er nicht mit dem Einführbereich 40 der Haltebacke 4 kollidiert. Vielmehr tritt nur der Schaft 50 mit dem Einführbereich 40 und insbesondere dem Einführschlitz 44 in Wechselwirkung.

Ist der Einführbereich 40 weit genug in den Greifarm 3 eingeschoben, so wird es dem Druckstift 5 erlaubt, sich in Richtung der Vorspannung zu bewegen. Damit verschiebt sich der Druckstift 5 relativ zum Einführbereich 40 und der Verriegelungsbereich 54 kommt in Eingriff mit der zu ihm komplementären Aussparung 42. Die Aussparung 42 bildet in Auszugsrichtung des Einführbereichs 40 einen Hinterschnitt aus. Durch den auf diese Weise hergestellten Formschluss kann damit eine Verriegelung der Haltebacke 4 am Greifarm 3 erreicht werden. Die Haltebacke 4 kann in der verriegelten Stellung damit nicht mehr aus dem Greifarm 3 herausgezogen werden.

Zum Demontieren wird der Druckstift 5 dann wieder entgegen der Vorspannung bewegt, so dass sich der Verriegelungsbereich 54 aus der Aussparung 42 heraushebt und der Formschluss auf diese Weise wieder aufgehoben wird. Der Einführbereich 40 kann dann aus dem Greifarm 3 in Auszugsrichtung herausgezogen werden, wobei der Schaft 50 des Druckstifts 5 durch den Einführschlitz 44 hindurchgleitet.

Wie den Figuren 2A und 2B zu entnehmen ist, weist der Greifarm 3 ferner eine Stiftaufnahmebohrung 34 auf, in welcher ein Stiftelement 10 aufgenommen ist. Die Stiftaufnahmebohrung 34 schließt sich an die Bohrung 30 zur Aufnahme des Druckstifts 5 an.

Das Stiftelement 10 ist über den vorgespannten Druckstift 5 positioniert und gehalten, wobei der Druckstift in der gezeigten Ausführungsform das Vorspannelement 11 gegen eine Stirnseite des Stiftelements 10 drückt. Alternativ kann der Druckstift 5 zum Positionieren des Stiftelements 10 auch einen direkten Kontakt mit dem Stiftelement 10 aufweisen.

Mithilfe des Stiftelements 10 ist die Lagerung 7 über den Druckstift 5 verriegelt. Dabei greift das durch den Druckstift 5 positionierte Stiftelement 10 in eine Nut 72 des Lagerbolzens 70, so dass dieser bezüglich seiner Längsachse in einer festen Position gehalten ist. Hierdurch ist, ohne ein Schwenken des Greifarms 3 um die Lagerung 7 zu beeinträchtigen, eine sichere Verriegelung des Lagerbolzens 70 und somit der Lagerung 7 durch den Druckstift 5 bereitgestellt.

Ferner ist die Gelenkverbindung 8 zwischen dem Greifarm 3 und dem Steuerelement 308 ebenfalls durch den vorgespannten Druckstift 5 verriegelt. Dabei greift das durch den Druckstift 5 positionierte Stiftelement 10 in eine Nut 82 des Verbindungsbolzens 80, so dass dieser in seiner Längsachse in einer festen Position gehalten ist. Hierdurch ist, eine sichere Verriegelung des Verbindungsbolzens 80 und somit der Gelenkverbindung 8 durch den Druckstift 5 bereitgestellt.

Für einen Austausch des Greifarms 3 sind der Druckstift 5 und das Stiftelement 10 zu entfernen. Im Anschluss können der Verbindungsbolzen 80 sowie der Lagerbolzen 70 axial aus der Lagerung bewegt werden, so dass der Greifarm 3 entnommen und gegebenenfalls durch einen anderen Greifarm ausgetauscht werden kann. Der andere Greifarm kann anschließend durch Einbringen des Lagerbolzens 70 oder eines anderen Lagerbolzens in die Lagerung 7 sowie des Verbindungsbolzens 80 oder eines anderen Verbindungsbolzens in die Gelenkverbindung 8 an dem Verschließerkopf 1 angebracht werden. Dabei sind die Gelenkverbindung 8 sowie die Lagerung 7 mittels des in den anderen Greifarm eingeführten Druckstifts 5 zu verriegeln. Ebenfalls kann für die Verriegelung der Gelenkverbindung 8 und/oder der Lagerung 7 durch den Druckstift 5 wiederum das Stiftelement 10 sowie ein anderes, in seiner Geometrie gegebenenfalls angepasstes Stiftelement mit einbezogen sein.

Der Anschlag 6 ist konzentrisch zur Längsachse L in eine Anschlagaufnahmetasche 90 der Greifmechanismushalterung 9 eingeführt und durch einen weiteren vorgespannten Druckstift 5 verriegelt. Zum Abdichten der Anschlagaufnahmetasche 90 gegenüber der Umgebung ist zwischen dem Anschlag 6 und der Greifmechanismushalterung 9 eine Dichtung 13 angeordnet.

In Figur 4 ist der Verschließerkopf 1 aus Figur 2B in einer schematischen Schnittansicht entlang der Schnittlinie B-B aus Figur 2B gezeigt. Das in der Stiftaufnahmebohrung 34 des Greifarms 3 aufgenommene Stiftelement 10 greift in die Nut 72 des Lagerbolzens 70, wodurch dieser und somit die Lagerung 7 in Achsrichtung des Lagerbolzens 70 verriegelt ist.

Ein in einer Aufnahmebohrung 92 der Greifmechanismushalterung 9 angeordneter Druckstift 5 weist einen zylindrischen Schaft 50 und einen Kopfbereich 52 auf, wobei der Kopfbereich 52 hierbei einen im Vergleich zu dem zylindrischen Schaft 50 vergrößerten Außendurchmesser aufweist. Zwischen dem Kopfbereich 52 und der Greifmechanismushalterung 9 ist eine Dichtung 53 zum Abdichten der Aufnahmebohrung 92 gegen die Umgebung angeordnet. Ferner ist an dem zylindrischen Schaft 50 ein Verriegelungsbereich 54 angeordnet, welcher den Außendurchmesser des Kopfbereichs 50 aufweist. Zum Vorspannen des Druckstifts 5 ist zwischen dem Verriegelungsbereich 54 und dem Boden der Aufnahmebohrung 92 ein elastisches Vorspannelement 11 in Form einer Spiralfeder angeordnet. Das Vorspannelement 11 liegt in einem verspannten Zustand vor und drückt somit gegen den Verriegelungsbereich 54.

Im Verschließerkopf 1 ist bevorzugt zentrisch der Anschlag 6 mittels des vorgespannten Druckstifts 5 an der Greifmechanismushalterung 9 verriegelt, wobei ein Einführbereich 60 des Anschlags in eine Anschlagaufnahmetasche 90 der Greifmechanismushalterung 9 eingeführt ist. Dabei greift der Verriegelungsbereich 54 des Druckstifts 5 in eine komplementäre Aussparung 62 des Anschlags 6, wobei das Vorspannelement 11 den Verriegelungsbereich in die Aussparung 62 drückt. Dadurch ist ein verspannter Formschluss zwischen dem Druckstift 5 und dem Anschlag 6 bereitgestellt.

Für ein Demontieren des Anschlags 6 ist der Druckstift 5 entgegen der Vorspannung in Richtung des Vorspannelements 11 axial zu verschieben. Dadurch wird der Verriegelungsbereich 54 aus der Aussparung 62 geschoben, so dass der Formschluss aufgehoben wird und der Anschlag 6 aus der Greifmechanismushalterung 9 entfernt werden kann. Nach dem Entfernen des Anschlags 6 wird der Druckstift 5 durch das Vorspannelement 11 in den oben beschriebenen, durch die Sicherungsanordnung erzeugten Formschluss gedrückt.

Für das Montieren eines weiteren Anschlags 6 ist der Druckstift 5 entsprechend wiederum in Richtung des Vorspannelements 11 zu verschieben, so dass der Anschlag 6 in die Greifmechanismushalterung 9 gesteckt werden kann. Nach Einstecken des Anschlags 6 und Loslassen des Druckstifts 5 wird dessen Verriegelungsbereich 54 wieder in die Aussparung 62 gedrückt, wodurch der Anschlag 6 in der Greifmechanismushalterung 9 verriegelt ist.

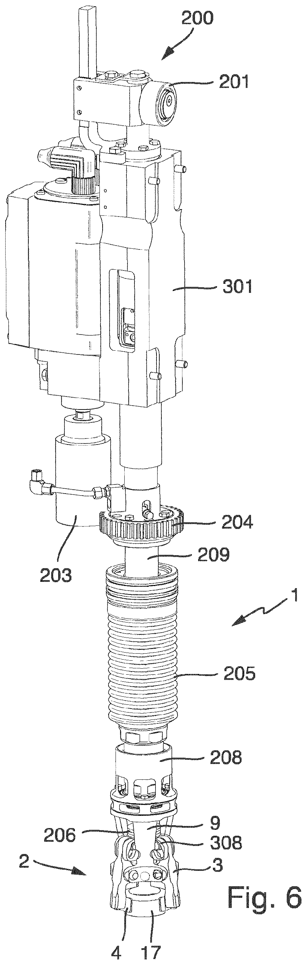

Figur 6 zeigt einen Verschließerkopf 1 zum Aufbringen eines Behälterverschlusses 17 auf einen zu verschließenden Behälter und Figur 7 zeigt eine schematische Schnittansicht durch diesen Verschließerkopf 1.

Der Behälterverschluss 17 ist durch den Greifmechanismus 2 im Verschließerkopf 1 aufgenommen und kann auf den Behälter aufgebracht beziehungsweise aufgeschraubt werden. Der nötige Hub zum Aufnehmen des Behälterverschlusses 17 von einem Pickrad, zum darauffolgenden Transportieren des Behälterverschlusses 17 über den Mündungsbereich des zu verschließenden Behälters und zum Absenken des Behälterverschlusses 17 auf die Mündung, wird über eine Laufrolle 201 in den Verschließerkopf 1 eingeleitet.

Wird der Verschließerkopf 1 falsch auf dem zu verschließenden Behälter oder auf dem Pickrad aufgesetzt oder tritt eine andere Kollision mit dem Behälter auf, kann der dabei entstehende Stoß über ein Dämpfungselement 202 abgefangen werden.

Das für das Aufschrauben eines Behälterverschlusses 17 auf einen zu verschließenden Behälter notwendige Drehmoment wird von einem von einem Antrieb angetriebenen Antriebsritzel 203 über ein Antriebsrad 204 auf eine Rotationshülse 209 übertragen. Die Übertragung des Drehmoments von der Rotationshülse 209 auf die Greifmechanismushalterung 9 erfolgt über ein dichtgeschweißtes Magnetsystem für Reinraumanwendungen, welches einen Außenmagneten 208 zur Übertragung und einen Innenmagneten 207 zur Aufnahme des Drehmoments umfasst. Eine Lagerung 307 dient der Übertragung der Öffungs- und Schließbewegung vom stehenden in den drehenden Teil.

Entsprechend kann das Drehmoment dann von der Rotationshülse 209 über die Greifmechanismushalterung 9 auf die Greifarme 3 und damit auch auf den zwischen diesen gehaltenen Behälterverschluss 17 wirken. Damit lässt sich der Behälterverschluss 17 dann auf dem Behälter aufschrauben.

Da der in Figur 6 und 7 dargestellte Veschließerkopf 1 bevorzugt für das hygienische Befüllen und Verschließen von Behältern eingesetzt werden soll, sind zusätzlich zwei dichtende Komponenten, bevorzugt in Form eines Faltenbalgs, vorgesehen. Die erste dichtende Komponente 205 dient zum Abdichten des Reinraums gegenüber der Umgebung. Die zweite dichtende Komponente 206 dient zum Abdichten der Ansteuervorrichtung 300 des Greifmechanismus 2.

Der Veschließerkopf 1 umfasst neben einer Hubvorrichtung 200 zum Anheben und Absenken des Verschließerkopfs 1 auf den zu verschließenden Behälter auch die Ansteuerungsvorrichtung 300 zum Ansteuern des Greifmechanismus 2. Die Ansteuerungsvorrichtung 300 umfasst einen Betätigungszylinder 301, einer Kolbenstange 305, die fest mit der Betätigungsstange 304 verbunden ist, und einer Lagerung 307, die mit dem Steuerelement 308 derart verbunden ist, dass die vom Betätigungszylinder 301 ausgehende Bewegung auf das Steuerelement 308 übertragen wird.

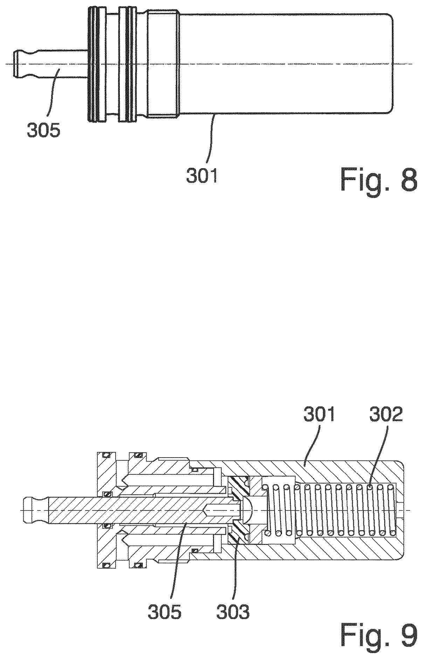

Figur 8 zeigt einen Betätigungszylinder 301 der Ansteuervorrichtung 300, aus welchem die Kolbenstange 305 herausragt. Figur 9 zeigt den Betätigungszylinder 301 in einer schematischen Schnittansicht.

Um das federunterstützte Öffnen der Greifer 3 des in Figur 1B dargestellten federöffnenden Verschließkopfs 1 zu bewirken, muss eine Kraft in Richtung der Unterseite des Verschließkopfs 1 auf das Steuerelement 308 wirken, so dass die Verbindungsbolzen 80 in den Langlochschlaufen 120 in Richtung deren oberen Enden bewegt werden. Dadurch, dass sich die oberen Enden der Langlochschlaufen 120 näher an der Längsachse L befinden, wird ein Schwenken der Greifarme 3 um die Lagerung 7 erreicht, sodass sich der Greifmechanismus 2 in einer geöffneten Position befindet.

Diese Kraft zum Öffnen des Greifmechanismus 2 wird durch ein als Feder ausgebildetes Vorspannelement 302 erzeugt. Das Vorspannelement beziehungsweise die Feder ist dabei im Betätigungszylinder 301 aufgenommen, so dass eine besonders hygienische Ausbildung der Ansteuerungsvorrichtung 300 erhalten werden kann.

Die Kraft des Vorspannelements 302 wirkt bei Abwesenheit einer durch ein Arbeitsmedium auf den Kolben 303 wirkenden Kraft auf den mit der Kolbenstange 305 verbundenen Kolben 303, sodass sich der Kolben 303 und die Kolbenstange 305 am untersten Punkt des Betätigungszylinders 301 befinden. Zum Schließen des Greifmechanismus 2 wird der Betätigungszylinder 301 mit Arbeitsmedium beaufschlagt, sodass sich der Kolben 303 nach oben, also entgegen der Richtung der Federkraft, bewegt. Dadurch bewegt sich die Kolbenstange 305 und damit das Steuerelement 308 in Richtung der Oberseite des Verschließerkopfs 1, so dass ein Verschwenken der Greifarme 3 in die geschlossene Position erreicht wird. Die Verbindungsbolzen 80 bewegen sich dann nämlich in den Langlochschlaufen 120 in Richtung zu deren unteren Enden. Dadurch, dass die unteren Enden der Langlochschlaufen 120 einen größeren Abstand zur Längsachse L aufweisen als die oberen Enden, wird ein Schwenken der Greifarme 3 um die Lagerung 7 erreicht, sodass sich der Greifmechanismus 2 dann in einer geschlossenen Position befindet.

### Bezugszeichenliste

- 1: Verschließerkopf
- 10: Stiftelement
- 11: Vorspannelement
- 120: Langlochschlaufe
- 13: Dichtung
- 14: Sicherungsanordnung
- 140: Schraube
- 17: Behälterverschluss
- 18: Lagerung
- 2: Greifmechanismus
- 200: Hubmechanismus
- 201: Laufrolle
- 202: Dämpfungselement
- 203: Antriebsritzel
- 204: Antriebsrad
- 205: Dichtungselement
- 206: Dichtungselement
- 207: Innenmagnet
- 208: Außenmagnet
- 209: Rotationshülse
- 3: Greifarm
- 30: Bohrung
- 32: Sicherungsaussparung
- 34: Stiftaufnahmebohrung
- 36: Absatz
- 300: Ansteuerungsvorrichtung
- 301: Betätigungszylinder
- 302: Vorspannelement
- 303: Kolben
- 304: Betätigungsstange
- 305: Kolbenstange
- 306: Verbindungsbaugruppe
- 307: Lagerung
- 308: Steuerelement
- 4: Haltebacke
- 40: Einführbereich
- 42: Aussparung
- 44: Einführschlitz
- 5: Druckstift
- 50: Schaft
- 52: Kopfbereich
- 53: Dichtung
- 54: Verriegelungsbereich
- 55: Madenschrauben
- 6: Anschlag
- 60: Einführbereich
- 62: Aussparung
- 63: Dichtung
- 7: Lagerung
- 70: Lagerbolzen
- 72: Nut
- 8: Gelenkverbindung
- 80: Verbindungsbolzen
- 82: Nut
- 9: Greifmechanismushalterung
- 90: Anschlagaufnahmetasche
- 92: Aufnahmebohrung

- L: Längsachse
- D: Druckstiftachse

## Patentansprüche

1. Verschließerkopf (1) zum Verschließen eines Behälters mit einem Schraubverschluss (17) in einer Getränkeabfüllanlage, umfassend einen Greifmechanismus (2) mit mindestens einem Greifarm (3) zum Greifen des Schraubverschlusses (17), einen Betätigungszylinder (301) zum Betätigen des Greifmechanismus (2) und ein Vorspannelement (302) zum Vorspannen des mindestens einen Greifarms (3), wobei
der Betätigungszylinder (301) ein Pneumatikzylinder ist und das Vorspannelement (302) im Pneumatikzylinder (301) angeordnet ist,
**dadurch gekennzeichnet, dass**
der Greifarm (3) durch das Vorspannelement (302) in Öffnungsrichtung vorgespannt ist.

2. Verschließerkopf (1) gemäß Anspruch 1, **dadurch gekennzeichnet, dass** das Vorspannelement (302) eine Druckfeder ist.

3. Verschließerkopf (1) gemäß einem der Ansprüche 1 bis 2, **dadurch gekennzeichnet, dass** der Greifarm (3) um eine Lagerung (7) schwenkbar ist, welche mittels eines vorgespannten Druckstiftes (5) verriegelt ist.

4. Verschließerkopf (1) gemäß einem der Ansprüche 1 bis 3, **dadurch gekennzeichnet, dass** der Greifarm (3) eine Haltebacke (4) zum Halten des Schraubverschlusses (17) aufweist, welche am Greifarm (3) mittels eines vorgespannten Druckstifts (5) verriegelt ist.

5. Verschließerkopf (1) gemäß einem der Ansprüche 1 bis 4, **dadurch gekennzeichnet, dass** ein Steuerelement (308) durch eine Gelenkverbindung (8) gelenkig mit dem Greifarm (3) verbunden ist und die Gelenkverbindung (8) zwischen dem Greifarm (3) und dem Steuerelement (308) mittels eines vorgespannten Druckstifts verriegelt ist.

## Claims

1. Closure head (1) for closing a container with a screw closure (17) in a beverage filling system, comprising a gripping mechanism (2) with at least one gripping arm (3) for gripping the screw closure (17), an actuating cylinder (301) for actuating the gripping mechanism (2), and a pre-tensioning element (302) for pre-tensioning of the at least one gripping arm (3), wherein the actuating cylinder (301) is a pneumatic cylinder and the pre-tensioning element (302) is disposed in the actuating cylinder (301),
**characterized in that**
the gripping arm (3) is pre-tensioned by the pre-tensioning element (302) in the direction of opening.

2. Closure head (1) according to claim 1, **characterized in that** the pre-tensioning element (302) is a pressure spring.

3. Closure head (1) according to claim 1 or 2, **characterized in that** the gripping arm (3) can be pivoted about a bearing (7) that is locked by means of a pre-tensioned pressure pin (5).

4. Closure head (1) according to any one of claims 1 to 3, **characterized in that** the gripping arm (3) comprises a holding jaw (4) for holding the screw closure (17), wherein the holding jaw (4) is locked on the gripping arm (3) by means of a pre-tensioned pressure pin (5).

5. Closure head (1) according to any one of claims 1 to 4, **characterized in that** a control element (308) is articulately connected with the gripping arm (3) by means of an articulated joint (8), and the articulated joint (8) between the gripping arm (3) and the control element (308) is locked by means of a pre-tensioned pressure pin (5).

## Revendications

1. Tête de fermeture (1) pour fermer un récipient avec une fermeture de récipient (17) dans une installation de remplissage de boissons, comprenant un mécanisme de préhension (2) avec au moins un bras de préhension (3) pour tenir la fermeture de récipient (17), un cylindre d'actionnement (301) pour actionner le mécanisme de préhension (2) et un élément de précontrainte (302) pour précontraindre le au moins un bras de préhension (3), dans laquelle
le cylindre d'actionnement (301) est un cylindre pneumatique et l'élément de précontrainte (302) est agencé dans le cylindre d'actionnement (301).
**caractérisée en ce que**
le bras de préhension (3) est précontraint dans le sens de l'ouverture par l'élément de précontrainte (302).

2. Tête de fermeture (1) selon la revendication 1, **caractérisée en ce que** l'élément de précontrainte (302) est un ressort de pression.

3. Tête de fermeture (1) selon l'une quelconque des revendications 1 à 2, **caractérisée en ce que** le bras de préhension (3) peut pivoter autour d'un palier (7) qui est verrouillé au moyen d'une tige de pression précontrainte (5).

4. Tête de fermeture (1) selon l'une quelconque des revendications 1 à 3, **caractérisée en ce que** le bras de préhension (3) présente une mâchoire de maintien (4) pour tenir la fermeture de récipient (17), laquelle mâchoire est verrouillée sur le bras de préhension (3) au moyen d'une tige de pression précontrainte (5).

5. Tête de fermeture (1) selon l'une quelconque des revendications 1 à 4, **caractérisée en ce qu'un** élément de commande (308) est articulé sur le bras de préhension (3) par une connexion articulée (8) et **en ce que** la connexion articulée (8) est verrouillée entre le bras de préhension (3) et l'élément de commande (308) au moyen d'une tige de pression précontrainte.
